# FASCICULE DE BREVET EUROPEEN

(11) **EP 0 545 741 B1**
(45) Date de publication et mention de la délivrance du brevet: **19.08.1998**
(21) Numéro de dépôt: 92402781.6
(22) Date de dépôt: 12.10.1992
(51) Int. Cl.: D21H 13/40, B32B 13/08

(54) **Papier et son application à une nouvelle plaque de plâtre**
Papier, und seine Verwendung für eine neue Gipsplatte
Paper and its application to a new plasterboard

(30) Priorité: 06.11.1991 FR 9113672
(43) Date de publication de la demande: 09.06.1993
(73) Titulaire: ARJO WIGGINS S.A., 92130 Issy-les-Moulineaux (FR); PLACOPLATRE, 95200 Rueil Malmaison (FR)
(72) Inventeur: Berhaut, Jean-Bernard, F-38850 Charavines (FR); Villeger, Philippe, F-60300 Senslis (FR); Frappart, Etienne, F-75013 Paris (FR); Vermersch, Marc-Aurèle, F-78000 Versailles (FR)
(74) Mandataire: Leszczynski, André

(56) Documents cités:
- FR-A- 1 562 088
- GB-A- 2 122 233
- US-A- 4 020 237
- Britt, K.W., "Handbook of Pulp and Paper Technology", 2e édition, 1970, Van Nostrand Reinhold Company, New York, pages 631-641.

## Description

La présente invention concerne un nouveau papier et son application comme parement de plaque de plâtre. L'invention concerne en outre une nouvelle plaque de plâtre comportant un tel papier et répondant à un besoin de la réglementation française concernant la réaction au feu.

On connaît déjà des plaques de plâtre qui sont fabriquées en déposant une gâchée , à savoir de l'eau et du sulfate de calcium hémihydraté entre deux feuilles de carton multijets, puis on sèche. Or, ces plaques de plâtre composées de carton essentiellement cellulosique, présentent un dégagement calorifique surfacique supérieur à 500 kcal/m², c'est-à-dire qu'elles ne peuvent répondre au classement M₀ de la norme française de classification au feu (journal officiel 1-12-83-NC 10635 Section IV-article 87-paragraphe 1). Or, pour certaines constructions,notamment des bâtiments publics, on désire que les matériaux répondent à cette norme M₀.

On a fabriqué des plaques de plâtre qui ont des parements constitués de feuilles de voile de verre que l'on imprègne légèrement de plâtre avant la fabrication effective de la plaque de plâtre. Ces plaques répondent à la norme M₀, mais du fait que les feuilles de voile de verre sont imprègnées de plâtre, la fabrication du produit nécessite des machines spéciales et la plaque de plâtre a de ce fait un coût de revient élevé.

On cherche donc a remplacer ces feuilles de voile de verre par du papier pour pouvoir de nouveau utiliser des machines traditionnelles qui fabriquent les plaques de plâtre avec parement carton. Ce papier doit avoir un pouvoir calorifique inférieur à 500 kcal/m². On a donc cherché à baisser ce pouvoir calorifique en ajoutant au papier des matières non combustibles. Cependant, en rajoutant des matières non combustibles, on diminue la résistance mécanique du parement. Ce parement doit en effet être résistant mécaniquement car c'est le parement qui contribue en partie à la résistance mécanique à la plaque de plâtre.

Le document FR-A-1 562 088 décrit une feuille de gypse recouverte d'un papier qui contient de 2 à 20% en poids de fibres de verre. Dans l'exemple 1, on décrit la fabrication d'une feuille de papier à sept couches.

La feuille totale a un poids/surface ou grammage de 0,32 à 0,35 kg/m2, soit 320 à 350 g/m2, donc très élevé.

Par ailleurs, dans ce document on ne se préoccupe pas des normes de réaction au feu.

De plus, du fait que le grammage de cette feuille est élevé, la feuille a une résistance à la traction importante.

Dans FR-A-1 562 088, on ne se pose donc pas le problème d'une monocouche de papier utilisable comme parement de plâtre, de faible grammage, résistante mécaniquement et résistante au feu.

Le document K.W. Britt "Handbook of Pulp and Paper Technology" 2ème édition, 1970, Van Nostrand Reinhold Company, New York, pages 631-641 (Chapitre 8-5 "Starch" par L.J. Coughlin) décrit les utilisations de l'amidon dans l'industrie papetière.

Le but de l'invention est donc de fournir une plaque de plâtre composée d'une âme de gypse comprenant comme adjuvants des auxiliaires de fabrication et de mise en oeuvre, chaque face de la plaque de plâtre étant revêtue d'un parement en papier.

On admet le classement M₀ pour un matériau multicouches ayant une couche combustible en surface ou interne, lorsque:
1. Il satisfait aux conditions qui permettent son classement dans la catégorie M₁;
2. La couche combustible a un dégagement calorifique surfacique inférieur à 2,1 MJ/m² (500 kcal/m²) ;
3. Le pouvoir calorifique supérieur de l'ensemble du matériau est inférieur ou égal à 2,5 MJ/kg (environ 600 kcal/kg).

Un autre but de l'invention est de fournir un parement conférant à la plaque les résistances mécaniques désirées. Pour ce faire le parement lui-même doit avoir certaines résistances mécaniques, à savoir la résistance à la rupture, sens marche, supérieure à 20 daN (pour une éprouvette de 15 mm de large et 10 cm de long) et une résistance à la rupture sens travers supérieure à 6 daN/15 mm.

Un autre but de l'invention est d'obtenir un parement à base de cellulose le plus mince possible afin d'avoir un pouvoir calorifique inférieur à 500 kcal/m², tout en ayant les résistances mécaniques élevées citées plus haut.

Un autre but de l'invention est de fournir une plaque de plâtre avec parements de papier, cette plaque étant produite à la même vitesse et avec des moyens proches de ceux utilisés pour une plaque cartonnée de réaction au feu M₁.

Encore un autre but de l'invention est de fournir une plaque de plâtre avec parements de papier, cette plaque étant prête à peindre et ne nécessitant pas d'enduisage préalable.

A cet effet, l'invention concerne un parement comprenant un papier de base monocouche de grammage supérieur ou égale à 90 g/m² et inférieur ou égal à 120 g/m² composé de :
- au moins 15 % de fibres de verre ou de laine de roche,
- le reste étant des fibres de cellulose, le tout faisant 100 %,
le papier étant imprimé d'une couche d'un agent de rigidification et contenant une quantité de matières combustibles telle que le dégagement calorifique surfacique du papier est inférieur à 500 kcal/m².

Les fibres de verre confèrent un gonflant au parement et donc une main élevée. De ce fait, on peut imprégner des quantités importantes d'agent de rigidification. Cet agent de rigidification confère au papier une résistance à la rupture élevée.

En outre, l'intérêt de l'utilisation dans le parement de fibres de verre coupées est de pouvoir constituer une armature pour la plaque de plâtre lorsque celle-ci est soumise au feu : en effet, le plâtre devient friable lorsqu'il commence à se déshydrater par la chaleur.

Les fibres de verre sont préférentiellement des fibres coupées de diamètre compris entre 7 et 14 micromètres et de longueur comprise entre 3 et 12 mm. On peut également utiliser toutes fibres de verre sous forme de laine, également appelées « microfibres », ou laine de roche.

Plus particulièrement le grammage du papier de base est compris entre 90 et 120 g/m².

De préférence, le parement est tel qu'il contient au maximum 105 g/m² de matières organiques combustibles pour répondre à la norme M₀.
Par ailleurs, on a constaté de manière surprenante, que le rapport fibres de verre/cellulose/agent de rigidification a une influence sur les résistances mécaniques. De préférence, le parement est tel qu'il comprend entre 15 et 25 parties de fibres de verre coupées, entre 50 et 90 parties de cellulose et entre 15 et 30 parties de rigidification. Les parties sont données pour faire 100 % de fibres, en poids sec dans la présente description.

De préférence, l'agent de rigidification est l'amidon, soit natif, soit enzymé, soit traité chimiquement.

Selon un mode de réalisation de l'invention, le papier de base a la composition suivante:
- 19 parties de fibres de verre,
- 62 parties de fibres de cellulose,
- 19 parties d'amidon.

On peut éventuellement ajouter des additifs papetiers utilisés couramment, tels que liants, agents de collage, agents de résistance humide, fongicides, etc.

Selon un mode de réalisation préféré de l'invention, la plaque de plâtre a une épaisseur comprise entre 9,5 et 23 mm et est fabriquée en continu à une vitesse de 25 à 80 m/min.

La composition de la gâchée peut par exemple être la suivante, en % en poids par rapport au poids du plâtre :
- de 0,4 à 1 % d'accélérateur de prise constitué de gypse finement divisé (diamètre moyen de 5 à 10 micromètres) enrobé de 1 à 5 % d'agents tensio-actifs,
- de 0 à 0,2 % de fluidisants du type lignosulfonate d'ammonium ou de préférence condensats de naphtalène sulfonate de sodium/formaldéhyde ou mélamine/formaldéhyde,
- de 0,02 à 0,1 % de tensio-actifs d'entraînement d'air du type lauryl-éther sulfate de sodium.

Une telle composition permet d'obtenir à la découpe l'adhérence papier/gypse nécessaire pour effectuer le transfert de la plaque en zone de séchage.

On peut aussi utiliser de l'amidon de blé ou de maïs hydrolysé et estérifié en des quantités comprises entre 0,3 et 1 % en poids par rapport au poids de plâtre sec, ce qui permet, en adaptant le séchage de la plaque, d'obtenir des plaques dont la solidarisation entre le papier et le gypse est optimale.

On peut aussi utiliser d'autres auxiliaires de renfort des propriétés mécaniques et de résistance au feu, par exemple des argiles expensibles et des fibres minérales longues.

L'invention sera mieux comprise en regard des exemples non limitatifs suivants:

### EXEMPLE 1 (comparatif)

On met en suspension aqueuse un mélange de 77 parties de fibres de cellulose raffinées à 20 degrés SCHOPPER-RIGLER, de 23 parties de fibres de verre de longueur 3,2 mm et de diamètre 11 micromètres et 0,4 parties d'un agent de résistance humide type polyamide-amine-épichlorhydrine. On envoie cette suspension aqueuse dans une caisse de tête d'une machine à papier du type Fourdrinier et on forme un feuille de papier de base ayant un grammage de 90 g/m². On imprègne en size press ce papier de base au moyen d'une suspension aqueuse d'amidon de maïs oxydé, et on fait varier la reprise en amidon de 0 à 29,5 g/m². On mesure les résistances à la rupture en sens marche et sens travers.

On obtient les valeurs suivantes:

| Reprise amidon | grammage g/m² | Rupture sens marche daN/ 15mm | Rupture sens travers daN/ 15mm | Matières organiques g/m² |
|---|---|---|---|---|
| 0 | 90 | 6,4 | 3,55 | 69 |
| 8,9 | 98 | 13,35 | 5,9 | 78 |
| 19 | 110 | 16,55 | 7,75 | 88 |
| 29,5 | 124 | 18,4 | 9,05 | 99 |

On voit qu'on ne peut atteindre la résistance à la rupture en sens marche tout en ayant un grammage total de matières organiques combustibles inférieur à 105 g/m².

### EXEMPLE 2 (comparatif)

On reprend l'exemple 1 en modifiant le grammage du papier de base. On part d'un support ayant un grammage de 120 g/m², contenant 23 parties de fibres de verre et 77 parties de fibres de cellulose. On imprègne en size press par de l'amidon en faisant varier la reprise de 0 à 30,1 g/m².
On obtient les valeurs suivantes:

| Reprise amidon | grammage g/m² | Rupture sens marche daN/ 15mm | Rupture sens travers daN/ 15mm | Matières organiques g/m² |
|---|---|---|---|---|
| 0 | 119 | 10,0 | 5,6 | 91 |
| 5,1 | 122 | 13,0 | 6,65 | 96 |
| 10,2 | 127 | 16,4 | 7,6 | 101 |
| 20,7 | 142 | 21,7 | 10,6 | 112 |
| 30,1 | 150 | 23,2 | 12,1 | 121 |

On voit que l'on atteint une résistance à la rupture en sens marche supérieure à 20 daN et en sens travers supérieur à 6 daN. Cependant le parement contient plus de 105g/m² de matières organiques combustibles.

### EXEMPLE 3 (l'invention)

On reprend l'exemple 1 en partant d'un support ayant un grammage de 105 g/m². On imprègne en size press par de l'amidon en faisant une reprise de 25 g/m² d'amidon. On obtient une résistance à la rupture sens marche et sens travers supérieurs aux valeurs limites, tout en ayant 105 g/m² de matières organiques combustibles et donc respectant à la fois les normes de résistances mécaniques et les normes de réaction au feu.

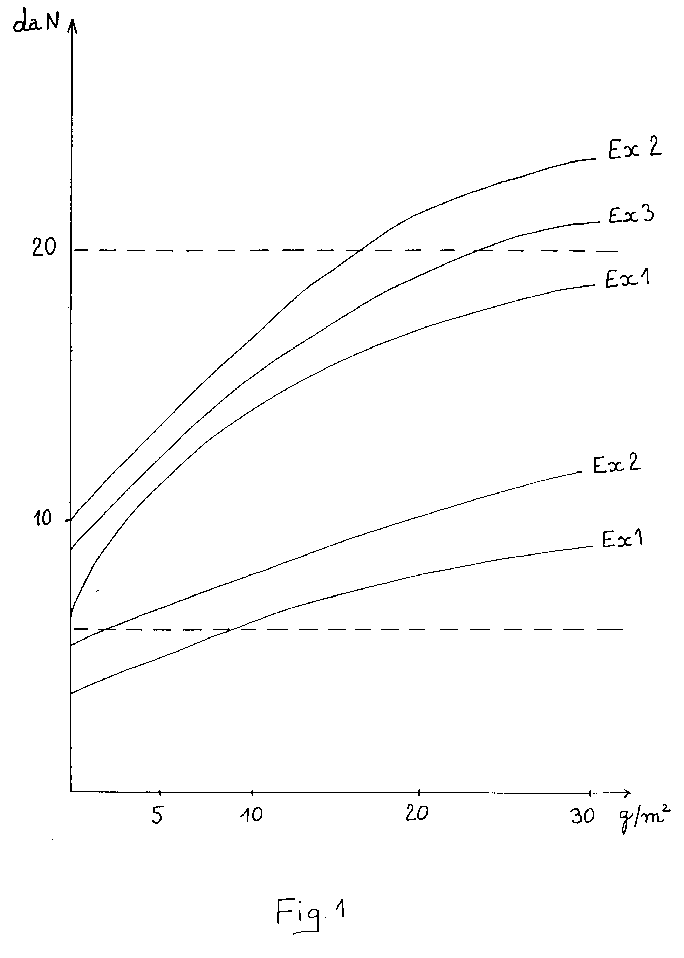

La figure 1 représente les courbes de valeurs de rupture en ordonnées, en fonction en abscisses de la reprise en amidon.

### EXEMPLE 4 (l'invention)

On prend une feuille fabriquée selon l'exemple 3 et on dépose sur celle-ci une gâchée comprenant:
56,6 % de sulfate de calcium hémihydraté,
0,35 % de gypse finement divisé,
0,08 % de condensats de mélamine/formaldéhyde,
0,07 % de lauryléther sulfate de sodium,
0,4 % d'amidon de maïs hydrolysé et éthérifié,
42,5 % d'eau.

On dépose sur la gâchée une seconde feuille selon l'exemple 3.

La vitesse à laquelle on fabrique la plaque est de 45 m/min. La plaque de plâtre a une épaisseur de 12,5 mm.

On sèche et on obtient une plaque de plâtre qui n'a pas besoin d'être enduite, contrairement aux plaques obtenues avec des voiles de verre. La plaque répond aux spécifications de la norme NF P72-302 et au classement Mₒ.

## Revendications

1. Parement pour plaque de plâtre comprenant un papier de base monocouche de grammage supérieur ou égal à 90 g/m² et inférieur ou égal à 120 g/m² composé de :
- au moins 15 % de fibres de verre ou de laine de roche,
- le reste étant des fibres de cellulose, pour faire 100 %,
le papier étant imprégné d'un agent de rigidification et contenant une quantité de matières organiques combustibles telle que son dégagement calorifique est inférieur à 500 kcal/m².

2. Parement selon la revendication 1, caractérisé par le fait qu'il comprend entre 15 et 25 parties de fibres de verre coupées, entre 50 et 90 parties de cellulose et entre 15 et 30 parties d'agent de rigidification.

3. Parement selon l'une des revendications 1 à 2, caractérisé par le fait qu'il a la composition suivante :
- 19 parties de fibres de verre,
- 62 parties de fibres de cellulose,
- 19 parties d'amidon.

4. Parement selon l'une des revendications 1 à 3, caractérisé par le fait qu'il comprend un papier de base ayant la composition suivante :
- 23 parties de fibres de verre,
- 77 parties de fibres de cellulose, ce papier de base ayant un grammage de 105 g/m² et étant imprégné par 25 g/m².

5. Plaque de plâtre, caractérisée en ce que, outre au moins un parement selon l'une quelconque des revendications 1 à 6, elle comprend, en % en poids par rapport au poids du plâtre :
- de 0,4 à 1 % d'accélérateur de prise,
- de 0 à 0,2 % de fluidisants,
- de 0,02 à 0,1 % de tensio-actifs.

6. Plaque de plâtre selon la revendication 5, caractérisée en ce que l'accélérateur de prise est constitué de gypse finement divisé, de diamètre moyen de 5 à 10 micromètres, enrobé de 1 à 5 % d'agents tensio-actifs.

7. Plaque de plâtre selon l'une des revendications 5et 6, caractérisée en ce que les fluidisants sont choisis parmi le lignosulfate d'ammonium, les condensats de naphtalènesulfonate de sodium/formaldéhyde ou mélamine/formaldéhyde.

8. Plaque de plâtre selon l'une des revendications 5 à 7, caractérisée en ce que les tensio-actifs sont des lauryl-éther sulfates de sodium.

## Patentansprüche

1. Verkleidung für eine Wandgipsplatte, bestehend aus einlagigem Rohpapier mit einer Flächenmasse von 90 g/m² oder darüber und weniger als 120 g/m², das sich zusammensetzt aus:
- mindestens 15% Glasfasern oder Steinwolle,
- wobei der Rest auf 100% aus Cellulosefasern besteht,
wobei das Papier mit einem Versteifungsmittel imprägniert wird und solch einen Gehalt an brennbaren organischen Stoffen aufweist, daß seine Wärmeentwicklung weniger als 500 kcal/m² beträgt.

2. Verkleidung nach Anspruch 1, dadurch gekennzeichnet, daß sie 15 bis 25 Teile Glasschnittfasern, 50 bis 90 Teile Cellulose und 15 bis 30 Teile Versteifungsmittel enthält.

3. Verkleidung nach Anspruch 1 oder 2, dadurch gekennzeichnet, daß sie folgende Zusammensetzung aufweist:
- 19 Teile Glasfasern,
- 62 Teile Cellulosefasern und
- 19 Teile Stärke.

4. Verkleidung nach einem der Ansprüche 1 bis 3, dadurch gekennzeichnet, daß sie ein Rohpapier mit folgender Zusammensetzung enthält:
- 23 Teile Glasfasern und
- 77 Teile Cellulosefasern, wobei dieses Rohpapier eine Flächenmasse von 105 g/m² besitzt und mit 25 g/m² imprägniert wird.

5. Wandgipsplatte, dadurch gekennzeichnet, daß sie außer mindestens einer Verkleidung nach einem der Ansprüche 1 bis 6 in Gew.-%, bezogen auf das Gipsgewicht, folgendes enthält:
- 0,4 bis 1% Abbindebeschleuniger,
- 0 bis 0,2% Fließmittel und
- 0,02 bis 0,1% Tenside.

6. Wandgipsplatte nach Anspruch 5, dadurch gekennzeichnet, daß der Abbindebeschleuniger aus feinverteiltem, mit 1 bis 5% Tensiden überzogenem Gips mit einem mittleren Durchmesser von 5 bis 10 Mikrometern besteht.

7. Gipsplatte nach Anspruch 5 oder 6, dadurch gekennzeichnet, daß die Verlaufmittel aus Ammoniumlignosulfat und Natrium-naphthalinsulfonat-Formaldehyd bzw. Melamin-Formaldehyd-Kondensaten ausgewählt werden.

8. Gipsplatte nach einem der Ansprüche 5 bis 7, dadurch gekennzeichnet, daß es sich bei den Tensiden um Natrium-laurylethersulfate handelt.

## Claims

1. Facing for plasterboard comprising a single-layer base paper with a weight per unit area of greater than or equal to 90 g/m² and less than 120 g/m² composed of:
- at least 15% of rock wool or glass fibres,
- the remainder being cellulose fibres, to make 100%,
the paper being impregnated with a stiffening agent and containing an amount of combustible organic matter such that its emission of heat is less than 500 kcal/m².

2. Facing according to Claim 1, characterized in that it comprises between 15 and 25 parts of cut glass fibres, between 50 and 90 parts of cellulose and between 15 and 30 parts of stiffening agent.

3. Facing according to either of Claims 1 and 2, characterized in that it has the following composition:
- 19 parts of glass fibres,
- 62 parts of cellulose fibres,
- 19 parts of starch.

4. Facing according to one of Claims 1 to 3, characterized in that it comprises a base paper having the following composition:
- 23 parts of glass fibres,
- 77 parts of cellulose fibres, this base paper having a weight per unit area of 105 g/m² and being impregnated with 25 g/m².

5. Plasterboard, characterized in that, in addition to at least one facing according to any one of Claims 1 to 4, it comprises, as % by weight with respect to the weight of the plaster:
- from 0.4 to 1% of setting accelerator,
- from 0 to 0.2% of plasticizers,
- from 0.02 to 0.1% of surfactants.

6. Plasterboard according to Claim 5, characterized in that the setting accelerator is composed of finely divided gypsum, with a mean diameter of 5 to 10 micrometres, coated with 1 to 5% of surface-active agents.

7. Plasterboard according to either of Claims 5 and 6, characterized in that the plasticizers are chosen from ammonium lignosulphate or sodium naphthalenesulphonate/formaldehyde or melamine/formaldehyde condensates.

8. Plasterboard according to one of Claims 5 to 7, characterized in that the surfactants are sodium lauryl ether sulphates.
